# EUROPEAN PATENT SPECIFICATION

(11) **EP 2 219 839 B1**
(45) Date of publication and mention of the grant of the patent: **26.10.2011**
(21) Application number: 08864477.8
(22) Date of filing: 18.12.2008
(51) Int. Cl.: B29B 9/14, B29B 15/12, C03C 25/26

(54) **PROCESS FOR PRODUCING LONG GLASS FIBRE-REINFORCED THERMOPLASTIC COMPOSITIONS**
VERFAHREN ZUR HERSTELLUNG VON MIT LANGEN GLASFASERN VERSTÄRKTEN THERMOPLASTISCHEN ZUSAMMENSETZUNGEN
PROCÉDÉ POUR PRODUIRE DES COMPOSITIONS THERMOPLASTIQUES RENFORCÉES PAR DES FIBRES DE VERRE LONGUES

(30) Priority: 21.12.2007 EP 07024897
(43) Date of publication of application: 25.08.2010
(73) Proprietor: Saudi Basic Industries Corporation, Riyadh 11422 (SA)
(72) Inventor: SOLIMAN, Maria, NL-6160 GA Geleen (NL); MEIJERS, Ramon Hubertus Anna Maria, NL-6160 GA Geleen (NL); BOYENS, Joseph Paulus Hubertus, NL-6160 GA Geleen (NL); DAALMANS, Johannes Henricus Theodorus, NL-6160 GA Geleen (NL)
(74) Representative: Zuideveld, Mihaela
(86) International application number: PCT/EP2008/010813
(87) International publication number: WO 2009/080281

(56) References cited:
- EP-A- 0 921 919
- EP-A- 1 364 760
- WO-A-01/76841
- NL-C2- 1 010 646
- US-A- 4 486 373

## Description

The invention relates to a process for producing a long glass fibre-reinforced thermoplastic composition, which comprises a step of applying a sheath of thermoplastic polymer around a multifilament strand.

Such process is known from publication EP 0994978 B1. This document discloses a process for producing glass fibre-reinforced compositions, which comprises the steps of forming a multitude of filaments; coating the filaments, specifically the individual filaments, with a non-aqueous sizing composition, subsequently collecting the glass filaments into a strand, and then applying a sheath of polymer resin around the glass multifilament strand, generally after intermediate storage of the strand wound into a package. The non-aqueous sizing composition comprises one or more film formers, which have a melting point of 30 to 60°C and a viscosity of 75 to 400 cPs at 100°C, and 0.1 - 5% by weight of one or more silane coupling agents. The glass multifilament strand contains a high amount of sizing composition, for example from about 3.5% to about 10% by weight, as determined by the loss on ignition method.

Introduced more than a half century ago, fibre-reinforced plastics are composite materials with a wide range of applications in industry, for example in the aerospace, automotive, shipping, building and construction industries. The term "composite" can apply to any combination of individual materials, for example to a thermoplastic polymer (the matrix) in which fibres (reinforcing filler) have been dispersed. A great diversity of organic fibres, including synthetic fibres such as polyamide, polytetrafluoroethylene, polyesters, natural fibres, such as cotton, hemp, flax, jute; and inorganic fibres, such as glass fibres and carbon fibres are often used as reinforcements in composite materials.

The reinforced plastics industry has been using glass fibres in different forms for reinforcing polymer matrices to produce a diversity of products. Glass fibres are generally supplied as a plurality of continuous, very long filaments, and can be in the form of strands, rovings or yarns. A filament is an individual fibre of reinforcing material. A strand is a plurality of bundled filaments. Yarns are collections of filaments or strands twisted together. A roving refers to a collection of strands wound into a package.

In the process of manufacturing glass fibres used for polymeric reinforcement, a plurality of glass filaments is generally drawn from a glass melt through a bushing or orifice plate. While the filaments are being drawn and before they are gathered into a strand, a chemical treatment composition, known also as sizing composition, is applied to them. This sizing composition is needed to impede interfilament abrasion when the filaments are gathered into strands, to prevent static charge build-up, and to enhance filament compatibility with the thermoplastic polymers that they are to reinforce. Sizing chemistry varies by application; for example, it can be formulated to improve fibre wettability during thermoplastic resin impregnation, reducing thus composite manufacturing time. The sizing compositions are generally systems based on solvent, melt or radiation cure. The solvent-based sizing compositions comprise organic materials which are generally dispersed, dissolved or suspended as aqueous compositions. The aqueous composition traditionally contains film forming materials, coupling agents that improve bonding between the fibre and resin matrix, and lubricants which generally prevent damaging filament surfaces; various examples of aqueous compositions are disclosed, for instance, in documents US4728573, WO95/11800 and EP0206189A1. Documents US4537610 and US3783001 disclose applying a non-aqueous, hot melt thermoplastic-based coating material to continuous filaments. Radiation cure-based organic chemicals are disclosed, for example, in US5171634 and US5011523. Typically, in glass fibre production, spun filaments are first treated with the sizing composition, and then gathered into a strand, which strand is then wound around a take-up bobbin to form a package; the package is also referred to in the art as a roving. The strands are dried in package form or they are first cut or chopped into segments of desired length and then dried. A wide variety of article properties can be achieved by selecting, for instance, the proper glass type, filament diameter, sizing composition and fibre forms.

In the production of short glass fibre compositions or compounds, chopped strands of pre-determined length are mixed with a thermoplastic polymer in an extruder, during which the integrity of the glass fibre strands is destroyed and the glass fibres are dispersed throughout the molten thermoplastic polymer; due to fibre breakage the fibre length is decreased during this process, typically to well below 1 mm. The obtained compound is formed into pellets. These pellets are consecutively supplied to an injection moulding or compression moulding machine and formed into moulded articles.

Long glass fibre-reinforced thermoplastic polymer compositions -optionally in the form of, for example, pellets or granules- are also being used in industry because they possess excellent mechanical strength, heat resistance and formability. Long glass fibre-reinforced compositions are generally prepared by a sheathing or wire-coating process, by crosshead extrusion or several pultrusion techniques. Using these technologies, impregnated or coated fibre strands are formed; these may then be cut into lengths, the pellets or granules thus obtained being suitable for further processing, i.e. for injection moulding and compression moulding as well as for extrusion compression moulding processes, into (semi)-finished articles. Long glass fibre-reinforced polymer compositions contain glass fibres having a length of at least 1 mm, often at least 2 mm and typically between 5 and 20 mm. As a result, glass fibres in moulded articles made from long glass fibre-reinforced polymer compositions generally are of higher length than in articles made from short glass fibre compositions, resulting in better mechanical properties.

In a pultrusion process, a bundle of continuous glass filaments is spread out into individual filaments and drawn through an impregnation die, into which the molten thermoplastic is injected, aiming at entirely wetting and impregnating each filament with the molten thermoplastic. A strand of diameter of about 3 mm is drawn from the die and then cooled. Finally the strand is chopped into segments of the desired length. The glass fibres are generally parallel to one another in the segment, with each fibre being individually surrounded by the thermoplastic.

The process of sheathing or wire-coating is done without wetting the fibres individually with thermoplastic, but by forming a continuous outer sheath, also called coating or skin, of a thermoplastic material around the continuous multifilament strand surface. The sheathed continuous strand is chopped into pellets or granules of desired length, e.g. for about 12 mm length, in which the fibres are generally parallel to one another and have the same length as the pellets or granules. The pellets are further supplied to an injection moulding or compression moulding machine, and during this moulding step the glass fibres are dispersed within the thermoplastic polymer and formed into moulded (semi)-finished articles. In order to further improve properties of moulded articles, the continuous strand can be treated with a coating or impregnating composition before applying a sheath of thermoplastic polymer. For example, in US 4486373 such a process is described wherein a glass roving is first dipped in a solution of a thermally curable epoxy resin in a volatile solvent. During subsequent moulding of the composition obtained, the epoxy resin is cured simultaneously with dispersion of the fibres. In NL1010646 and EP1364760A1 processes are disclosed wherein a glass fibre strand is first coated with a low viscosity polypropylene, and then with a second polypropylene of higher melt viscosity. In NL1010646 it is indicated that impregnation of fibres with the first polymer of lower viscosity is only obtained if the filaments in the strand are first spread, but that such impregnation would not be essential for obtaining products with good mechanical properties. EP1364760A1, in contrast, applies a special tool to impregnate the fibre bundles with a relatively high amount of polymer.

A drawback of the known process disclosed in document EP0994978B1 is the high amount of the sizing composition that is applied on the glass filaments directly after spinning, in combination with its low melting point, which results in redistribution of the sizing composition in the packaged fibres during storage and transportation at various temperature conditions; and further causing difficulties in handling and unwinding of packages, fouling of equipment up on contacting the fibres, fluctuations in production stability and reproducibility during the sheathing step, and thus resulting in quality variations of the long glass fibre-reinforced thermoplastic products and pellets or granules during handling and transportation.

The object of the invention is therefore to provide a process which does not show the disadvantages of this prior art.

This object is achieved according to the invention with a process as defined by the claims. More specifically, the invention concerns a process for producing a long glass fibre-reinforced thermoplastic polymer composition, which comprises the subsequent steps of a) unwinding from a package at least one continuous glass multifilament strand containing at most 2% by mass of a sizing composition; b) applying from 0.5 to 20% by mass of an impregnating agent to said at least one continuous glass multifilament strand to form an impregnated continuous multifilament strand; c) applying a sheath of thermoplastic polymer around the impregnated continuous multifilament strand to form a sheathed continuous multifilament strand, wherein the impregnating agent is non-volatile, has a melting point of at least 20°C below the melting point of the thermoplastic matrix, has a viscosity of from 2.5 to 100 cS at application temperature, and is compatible with the thermoplastic polymer to be reinforced.

Surprisingly, the process according to the invention, in which a relatively high amount, i.e. of from 0.5 to 20% by mass, of a certain impregnating agent is applied, to at least one continuous glass multifilament strand after unwinding it from a roving package and in-line with the subsequent sheathing step, having at most 2% by mass of a sizing composition, allows trouble-free handling and unwinding of packages, no fouling of the equipment used, stable and constant production and good reproducibility during the sheathing step, and results in long glass fibre-reinforced thermoplastic products of constant quality, and in pellets that show and develop no fluff or free glass filaments during handling and transportation.

Document EP0921919B1 also discloses the manufacture of a thermoplastic-sheathed composite strand, but in this process a plurality of individual glass filaments is first coated with a sizing composition and then gathered into an impregnated multifilament strand before applying a sheath. Thus, this reference does not disclose or suggest applying an impregnating agent to a multitude of filaments, after they have been bundled into a strand.

NL1010646 and EP1364760A1 both disclose a process wherein a glass fibre bundle is first coated or impregnated with a first polypropylene of specific viscosity and then sheathed with a second polypropylene of higher viscosity, but these documents do not teach to apply an impregnating agent as defined and having the very low viscosity as specified by the present invention.

Another advantage of the process according to the invention is that it allows excellent flexibility in using any type of reinforcing glass fibre suitable for a specific thermoplastic polymer matrix. Furthermore, the process according to the invention can be operated at high throughput rates, with constant product quality. A further advantage is that the process according to the invention enables production of articles from the long glass fibre-reinforced thermoplastic polymer compositions, in which the glass filaments are homogeneously dispersed during the moulding process, resulting in a moulded article having good quality surface and good mechanical properties, in particular high tensile strength and high impact strength.

The process for producing a long glass fibre-reinforced thermoplastic polymer composition according to present invention comprises a step of unwinding from a package at least one continuous glass multifilament strand containing at most 2% by mass of a sizing composition.

Glass multifilament strands containing a sizing composition and their preparation are known in the art. The glass filaments may have been formed by any method known to those skilled in the art. Particularly, the glass filaments have been formed by a melt spinning process.

Applying a sizing composition to the formed glass filaments is also well-known in the art. Suitable examples of conventional sizing compositions include solvent-based compositions, such as an organic material dissolved in aqueous solutions or dispersed in water and melt- or radiation cure-based compositions. More particularly, an aqueous sizing composition is traditionally applied on the individual glass filaments.

As already described in the art, *e.g.* in documents EP1460166A1, EP0206189A1 or US4338233, the aqueous sizing composition typically includes film formers, coupling agents and other additional components. The film formers are generally present in effective amount to protect fibres from interfilament abrasion and to provide integrity and processability for fibre strands after they are dried. Suitable examples of film formers generally include polyurethanes, polyesters, such as polycaprolactone, polyolefins, such as polypropylene, polyamides. It is already recognized in the art that the film former should be miscible with the polymer to be reinforced. For example, polycaprolactone may be used as film former when nylon is used as polymer to be reinforced; for reinforcing polypropylenes, suitable film formers generally comprise polyolefin waxes.

The coupling agents are generally used to improve the adhesion between the matrix thermoplastic polymer and the fibre reinforcements. Suitable examples of coupling agents known in the art as being used for the glass fibres include organofunctional silanes. More particularly, the coupling agent which has been added to the sizing composition is an aminosilane, such as aminomethyl-trimethoxysilane, N-(beta-aminoethyl)-gamma-aminopropyl-trimethoxysilane, gamma-aminopropyl-trimethoxysilane gamma-methylaminopropyl-trimethoxysilane, delta-aminobutyl-triethoxysilane, 1,4-aminophenyl-trimethoxysilane. In a preferred embodiment of the process of the invention, glass fibres having a sizing composition containing an aminosilane are applied as multifilament strands, to result in good adhesion to the thermoplastic matrix. Any other additional components known to the skilled person may be present in the sizing composition. Suitable examples include lubricants, used to prevent damage to the strands by abrasion, antistatic agents, crosslinking agents, plasticizers, surfactants, nucleation agents, antioxidants, pigments and any combinations thereof.

Typically, after applying the sizing on the glass filaments, the filaments are bundled into strands and then wound on bobbins to form a package. A continuous glass multifilament strand(s) which contains at most 2% by mass of a sizing composition is employed in the process of present invention. Preferably, a continuous glass multifilament strand(s) containing from 0.1 to 1% by mass of sizing composition, as determined by loss on ignition (LOI) is used. The LOI is a well-known technique for determining the amount of sizing on glass fibres. Preferably, strand(s) comprising continuous glass multifilaments on which a sizing composition has been applied as aqueous dispersion are employed in the process according to the invention.

The filament density of the continuous glass multifilament strand may vary within wide limits. Preferably, the continuous multifilament strand may have of from 500 to 10000 glass filaments/strand and more preferably from 2000 to 5000 glass filaments/strand, because of high throughput. The diameter of the glass filaments in the continuous multifilament strand may widely vary. Preferably, the diameter of the glass filaments ranges from 5 to 50 microns, more preferably from 10 to 30 microns and most preferably from 15 to 25 microns. Glass filaments diameters outside these ranges tend to result in a decrease of mechanical properties and/or enhanced abrasion of the equipment used.

The process of present invention comprises a subsequent step of applying of from 0.5 to 20% by mass of impregnating agent to said at least one strand, to form at least one impregnated continuous glass multifilament strand, wherein said impregnating agent is non-volatile, has a melting point of the impregnating agent is at least about 20°C below the melting point of the thermoplastic matrix, has a viscosity of from 2.5 to 100 cS at application temperature and is compatible with the thermoplastic polymer to be reinforced.

According to the present invention, the step of applying the specific impregnating agent takes place after unwinding the packaged continuous multifilament strand(s) containing the sizing composition, and in-line with the step of applying a sheath of thermoplastic polymer around the impregnated continuous glass multifilament strand(s). "In-line" means that no intermediate steps, such as for example storage or cooling, are performed between the step of applying the impregnating agent and the step of applying the thermoplastic polymer sheath. In practice both steps may be performed directly after each other, meaning for example that the impregnating agent still has substantially the same or similar temperature and low viscosity as during its application step.

Between the steps of unwinding and impregnating the glass fibre bundle, additional steps known to a skilled person may optionally be applied, like preheating of the glass fibres or spreading the glass filaments by pulling the strand over guide members or integrity breakers. It is, however, an advantage of the present process that such steps are not necessary to make good quality products at high speed.

The impregnating agent used in the process according to the present invention is at least one compound that is compatible with the thermoplastic polymer to be reinforced, abling it to enhance dispersion of the fibres in the thermoplastic polymer matrix during the moulding process.

The viscosity of the impregnating agent should be lower than 100 cS, preferably lower than 75 cS and more preferably lower than 25 cS at application temperature. The viscosity of the impregnating agent should be higher than 2.5 cS, preferably higher than 5 cS, and more preferably higher than 7 cS at the application temperature. An impregnating agent having a viscosity higher than 100 cS is difficult to apply to the continuous glass multifilament strand. Low viscosity is needed to facilitate good wetting performance of the fibres, but an impregnating agent having a viscosity lower than 2.5 cS is difficult to handle, e.g., the amount to be applied is difficult to control; and the impregnating agent could become volatile. Without wishing to be bound to any theory, the inventors believe that the impregnation of the continuous glass multifilaments strands, without separating or spreading of individual filaments, by the impregnating agent is driven mainly by capillary forces.

The melting point of the impregnating agent is at least about 20°C below the melting point of the thermoplastic matrix. Without being wished to be bound to any theory, the inventors think this difference in melting points, and thus in solidification or crystallisation points, promotes fibre impregnation also after applying the thermoplastic sheath and cooling the sheathed strand, and fibre dispersion during subsequent moulding. Preferably, the impregnating agent has a melting point at least 25 or 30°C below the melting point of the thermoplastic matrix. For instance, when the thermoplastic polymer matrix is polypropylene having a melting point of about 160°C, the melting point of the impregnating agent may be at most about 140°C.

The application temperature is chosen such that the desired viscosity range is obtained, and is preferably below the self-ignition temperature of the impregnating agent. For example, when the matrix is polypropylene, the application temperature of the impregnating agent can be from 15 to 200°C.

The amount of impregnating agent applied to the glass multifilament strand depends on the thermoplastic matrix, on the size (diameter) of the filaments forming the continuous strand, and on type of sizing that is on the surface of the fibres. According to the present invention, the amount of impregnating agent applied to the continuous glass multifilament strand should be higher than 0.5% by mass, preferably it is higher than 2% by mass, more preferably higher than 4% by mass and most preferably higher than 6% by mass; but should be lower than 20% by mass, preferably it is lower than 18% by mass, more preferably lower than 15% by mass and most preferably lower than 12% by mass. A certain minimum amount of impregnating agent is needed to assist homogeneous dispersion of glass fibres in the thermoplastic polymer matrix during moulding, but the amount should not be too high, because an excess of the agent may result in decrease of mechanical properties of the moulded articles. It is found that the lower the viscosity, the less impregnating agent can be applied. For instance, in case the thermoplastic matrix is polypropylene homopolymer with a melt index MFI of 25 to 65 g/10 min (230°C/2.16 kg) and the reinforcing long glass filaments have a diameter of 19 micron, the impregnating agent is preferably applied to the multifilament strand in an amount of from 2 to 10% by mass.

According to the present invention, the impregnating agent should be compatible with the thermoplastic polymer to be reinforced, and may even be soluble in said polymer. The skilled man can select suitable combinations based on general knowledge, and may also find such combinations in the art. Suitable examples of impregnating agents include low molar mass compounds, for example low molar mass or oligomeric polyurethanes, polyesters such as unsaturated polyesters, polycaprolactones, polyethyleneterephthalate, poly(alpha-olefins), such as highly branched polyethylenes and polypropylenes, polyamides, such as nylons, and other hydrocarbon resins. As a general rule, a polar thermoplastic polymer matrix requires the use of an impregnating agent containing polar functional groups; a non-polar polymer matrix involves using an impregnating agent having non-polar character, respectively. For example, for reinforcing a polyamide or polyester, the impregnating agent may comprise low molecular weight polyurethanes or polyesters, like a polycaprolactone. For reinforcing polypropylenes, the impregnating agent may comprise highly branched poly(alpha-olefins), such as polyethylene waxes, modified low molecular weight polypropylenes, mineral oils, such as, paraffin or silicon and any mixtures of these compounds. Preferably, the impregnating agent comprises a highly branched poly(alpha-olefin) and, more preferably, the impregnating agent is a highly branched polyethylene wax, in case the thermoplastic polymer to be reinforced is polypropylene; the wax optionally being mixed with for example from 10 to 80, preferably 20-70, mass% of a hydrocarbon oil or wax like a paraffin oil to reach the desired viscosity level.

According to the present invention, the impregnating agent is non-volatile, and substantially solvent-free. Being non-volatile means that the impregnating agent does not evaporate under the application and processing conditions applied; that is it has a boiling point or range higher than said processing temperatures. In the context of present application, substantially solvent-free" means that impregnating agent contains less than 10% by mass of solvent, preferably less than 5% by mass solvent. Most preferably, the impregnating agent does not contain any organic solvent.

The impregnating agent may further be mixed with other additives known in the art. Suitable examples include lubricants; antistatic agents; UV stabilizers; plasticizers; surfactants; nucleation agents; antioxidants; pigments; dyes; and adhesion promoters, such as a modified polypropylene having maleated reactive groups; and any combinations thereof, provided the viscosity remains within the desired range.

Any method known in the art may be used for applying the liquid impregnating agent to the continuous glass multifilament strand. Suitable methods for applying the impregnating agent to the continuous multifilament strands include applicators having belts, rollers, and hot melt applicators. Such methods are for example described in documents EP0921919B1 and EP0994978B1, in EP0397505B1 and references cited therein. The method used should enable application of a constant amount of impregnating agent to the continuous multifilament strand.

The subsequent step of the process according to the invention is applying a sheath of thermoplastic polymer around the impregnated continuous glass multifilament strand to form a sheathed continuous glass multifilament strand.

As known from the art, a sheath may be applied around a continuous glass strand for several reasons, for example to protect the strand from external elements, to strengthen the strand, and to provide a particular material on the strand for subsequent processing into moulded articles. Suitable examples of thermoplastic polymers generally used in the sheathing process include polyamides, such as polyamide 6, polyamide 66, or polyamide 46; polyolefins like polypropylenes and polyethylenes; polyesters, such as polyethylene terephthalate, polybutylene terephthalate; polycarbonates; polyphenylene sulphide; polyurethanes; also any type of polymer blends and compounds and any combinations thereon. More particularly, polypropylene, polybutylene terephthalate and polyamide 6 may be used. Preferably, the thermoplastic polymer used in the sheathing process is a crystalline polypropylene, like a propylene homopolymer, a random copolymer, or a so-called heterophasic copolymer of propylene and ethylene and/or another alpha-olefin.

The thermoplastic polymer may further contain one or more of usual additives, like stabilisers, processing aids, impact-modifiers, flame-retardants, acid scavengers, inorganic fillers, colorants, or components that further enhance properties of the reinforced compound, like compounds that enhance interfacial bonding between polymer and glass filaments. An example of the last compounds is a functionalized polyolefin, like a maleated polypropylene, in case the thermoplastic is a polypropylene.

Any method known in the art to apply a sheath of thermoplastic polymer around the continuous multifilament strand may be used in present invention. The sheathing or wire-coating process typically involves the application of a polymer layer on the outer surface of the continuous glass strand as it passes through the polymer melt in a die. Documents EP0921919B1 and EPP0994978B1 describe a typical sheathing or wire-coating method.
According to present invention, the resulting sheathed continuous multifilament strands comprise a core with a certain impregnated glass multifilament strand and a sheath comprising a thermoplastic polymer.

The process of the invention may further comprise a step wherein the sheathed continuous glass multifilament strands are cut or chopped into long fibre pellets or granules of desired length, suitable for further processing into (semi)-finished articles. Any suitable method known in the art, such as use of the devices mentioned in document EP0994978B1, may be used in present invention. The length of the glass fibres in the pellets or granules is typically substantially the same as the pellet or granule length, and may vary from 2 to 50 mm, preferably from 5 to 30 mm, more preferably from 6 to 20 and most preferably from 10 to 15 mm. The amount of glass fibres in the pellets or granules obtained with the process according to the invention may vary between 5 and 90 mass %, based on the total mass of the composition, preferably between 20 and 65 mass %, depending on the desired properties and end use.

The process according to present invention may comprise a further step of moulding the long glass fibre-reinforced thermoplastic polymer composition in pellet form into (semi-)finished articles. Suitable examples of moulding processes include injection moulding, compression moulding, extrusion and extrusion compression moulding. Injection moulding is widely used to produce articles such as automotive exterior parts like bumpers, automotive interior parts like instrument panels, or automotive parts under the bonnet. Extrusion is widely used to produce articles such rods, sheets and pipes. The length of the glass in the moulded article obtained with the process according to the invention may vary in a wide range, depending on e.g. the processing techniques and the starting length of the glass fibre, and to suit particular applications, for example the length may vary between 0.5 and 25 mm. Preferably, the average glass fibre length is at least 1 mm, more preferably at least 2 mm.

The invention also relates to moulded articles, made from the long glass fibre-reinforced thermoplastic polymer composition as obtained with the process according to the invention.

The invention will be further elucidated with reference to the following nonlimiting experiments.

### Methods

Long glass fibre-reinforced thermoplastic polymer compositions were prepared and then cut into granules; subsequent determination of properties such as isotropic strength, isotropic modulus and falling dart impact was done on injection-moulded specimens.
Injection moulding of plates for white spot counting was performed on a Stork ST300 machine with a mould having dimensions of 510x310x2 mm. White spots counting was based on visual observation of the amount of insufficiently dispersed bundles of filaments versus the black background, as an average of 15 plates. A moulded plate having an average count of at most 5 white spots is generally considered to represent an article with good appearance.
Injection moulding of samples for measuring isotropic strength and isotropic modulus was done on a Stork ST300 machine using a mould with dimensions of 270x310x3 mm. Specimen types as defined by ISO 527/1B were machined from plates obtained or cut by water jet, taking care to obtain smooth specimen edges.

Tensile testing was carried out according to ISO527/4. Test speed for determining E-modulus and tensile strength was 5 mm/min. Al least 6 specimens per orientation (0°, 45° and 90°) were tested. The test and calculation methods applied are described by J. Reichhold, A. Ruegg and W. Schijve in Internationale AVK-Tagung, Stuttgart, 5-6 November 2007, "Long Fibre Thermoplastic Materials (LFT) - Material properties properly characterised" A11, 119-138.
Determination of Falling dart impact strength (FDI) was performed according to ISO 6603-A3, whereby the dart had a diameter of 20 mm and a hemispherical tip; the total mass of dart plus additional weight was 22.63 kg; the dart was falling from a height of 1 m, and the samples had a thickness of 3.2 mm and were not clamped.
Determination of Charpy impact strength was performed according to ISO179/1 (notched and edgewise). Samples for testing, as defined by ISO 179, were machined or cut by water jet from injection moulded plates (270x310x3 mm), taking care to obtain smooth specimen edges.
Viscosity of the impregnating agent was measured according to ISO3104.

### Examples 1-5

Several long glass fibre-reinforced polypropylene compositions, comprising 30 mass % of glass fibres and different amounts of impregnating agent (LOI) were produced by using SABIC® PP579S propylene homopolymer with a MFI of 45 g/10 min (230°C/2.16 kg) as polymer matrix. The polymer matrix further comprised 1 mass % of a 40 mass % Carbon black masterbatch, 1 mass % of a functionalized polypropylene, and stabilisers.
The glass fibres used were standard Type 30 roving SE4121 3000 Tex, supplied by Owens Corning as a roving package, have filament diameter of 19 microns and contain aminosilane-containing sizing composition applied as aqueous dispersion. A blend of 30 mass % Vybar 260 (hyper-branched polymer, supplied by Baker Petrolite) and 70 mass % Paralux oil (paraffin, supplied by Chevron) was used as impregnating agent. The impregnating agent was molten and mixed at a temperature of 160°C and applied to the continuous glass multifilament strands after unwinding from the package, by using an applicator. The viscosity of the agent at this temperature was measured to be about 15 cS. This viscosity level appeared too low to enable a standard MFI measurement for polyolefins. The amount of impregnating agent on the glass fibres was determined by a LOI (loss on ignition) method, wherein an amount of about 5 gram of impregnated glass fibres was heated during 15 minutes at 525°C in a furnace; and LOI was calculated as [(mass after heating * 100)/mass before heating].
The sheathing step was performed in-line directly after the impregnating step, using a 75 mm twin screw extruder (manufactured by Berstorff, screw UD ratio of 34), at a temperature of about 250°C, which fed the molten polypropylene matrix material to an extruder-head wire-coating die having a die-hole of 2.8 mm. The line speed for impregnating and sheathing was 250 m/min. The sheathed strand was cut into pellets of 12 mm length. Production ran smoothly and stable during at least 8 hours; no fuzz of glass or fouling of glass guiding members was observed. In the container containing the pellets, no free glass fibres were found, meaning that all glass was effectively impregnated and sheathed. In the run wherein 10 mass% impregnating agent was applied line speed could be increased to over 300 m/min without any problems.
The results are given in Table 1.

### Comparative Experiment 6

This experiment was performed similar to Examples 1-5, but now a 30 mass % long glass fibre-reinforced polypropylene composition was made using Performax® 507 Glass Fibres (supplied by Owens Corning; having filament diameter of 19 micron and containing 7 mass % of sizing components); and no impregnating agent was applied. This experiment represents the process as described in EP0921919B1. Unwinding of the roving was observed to be irregular at times, the strands adhering to each other, and members for guiding the fibres to the wire-coating unit were found to become greasy and to collect dust and glass fibre fragments. Also breakage of glass filaments, resulting in groups of protruding curled filaments (fuzz) on the strand before the sheathing step, was observed. The results of testing are given in Table 1.

**Table1**

| | *LOI* | *White spots* | *Isotropic Strength* | *Isotropic Modulus* | *Charpy 0°* | *Charpy 45°* | *Charpy 90°* | *FDI* | *FDI Fₘₐₓ* |
|---|---|---|---|---|---|---|---|---|---|
| | *(mass%)* | *(number)* | *(MPa)* | *(MPa)* | *(kJ*/*m²)* | *(kJ*/*m²)* | *(kJ*/*m²)* | *(J*/*mm)* | *(N)* |
| Ex 1 | 6 | 8.1 | 66.5 | 4113 | 10.6 | 12.6 | 11.5 | 4.3 | 2002 |
| Ex 2 | 7 | 6.6 | 66.2 | 4088 | 10.4 | 12.1 | 12.9 | 4.4 | 1982 |
| Ex 3 | 8 | 5.3 | 65.2 | 4041 | 10.0 | 12.3 | 12.0 | 4.6 | 1940 |
| Ex 4 | 9 | 3.9 | 64.1 | 3967 | 11.0 | 13.3 | 12.2 | 4.0 | 1921 |
| Ex 5 | 10 | 2.3 | 64.4 | 4017 | 11.0 | 12.8 | 12.0 | 4.6 | 1869 |
| CE 6 | 7 | 4.5 | 62.3 | 4120 | 8.78 | 10.4 | 8.89 | 3.7 | 1777 |

### Examples 7- 9

Analogous to Examples 1-5, 30 mass% long glass fibre-reinforced polypropylene compositions were made, but now Type 30 roving SE4121 2400 Tex glass fibres containing filaments of 17 micron diameter were used. The results are given in Table 2, and indicate that a smaller filament diameter has a positive effect on mechanical properties, but that more impregnating agent is needed for optimum fibre dispersion (likely related to higher glass surface area).

### Example 10

Example 3 was repeated, but now a polypropylene composition based on SABIC® PP513MNK10 polypropylene impact copolymer, with a MFI of 70 g/10 min (230°C/2.16 kg) was used as polymer matrix. The results given in Table 2 indicate that the propylene copolymer results in better fibre dispersion, but somewhat lower mechanical strength and stiffness compared with a homopolymer matrix.

### Comparative Experiment 11

Analogous to Example 10, a 30 mass % long glass fibre-reinforced thermoplastic composition was made, but now based on Performax® 507 Glass Fibres, in accordance to the process of EP0921919B1. The results are given in Table 2. Compared to Example 10, the process ran less stable (fuzz and fouling) and also mechanical properties are found to be lower.

**Table 2**

| | *LOI* | *White spots* | *Isotropic Strength* | *Isotropic Modulus* | *FDI* | *FDI Fₘₐₓ* |
|---|---|---|---|---|---|---|
| | *(mass %)* | *(number)* | *(MPa)* | *(MPa)* | *(J*/*mm)* | *(N)* |
| Ex 7 | 6 | 15.2 | 68.1 | 4239 | 4.3 | 1969 |
| Ex 8 | 7 | 10.1 | 66.9 | 4195 | 4.2 | 1937 |
| Ex 9 | 8 | 9 | 66.3 | 4162 | 4.1 | 1883 |
| Ex 10 | 8 | 1.3 | 55.4 | 3658 | 4.6 | 2085 |
| CE 11 | 7 | 1 | 51.0 | 3705 | 4.0 | 1850 |

## Claims

1. A process for producing a long glass fibre-reinforced thermoplastic polymer composition, which comprises the subsequent steps of:
a) unwinding from a package of at least one continuous glass multifilament strand containing at most 2% by mass of a sizing composition;
b) applying from 0.5 to 20% by mass of an impregnating agent to said at least one continuous glass multifilament strand to form an impregnated continuous multifilament strand;
c) applying a sheath of thermoplastic polymer around the impregnated continuous multifilament strand to form a sheathed continuous multifilament strand;
**characterised in that** the impregnating agent is non-volatile, has a melting point of at least 20°C below the melting point of the thermoplastic matrix, has a viscosity of from 2.5 to 100 cS at application temperature, and is compatible with the thermoplastic polymer to be reinforced.

2. The process according to Claim 1, further comprising a step of cutting the sheathed continuous glass multifilament strand into pellets.

3. The process according to Claim 1 or 2, wherein the thermoplastic polymer is a polypropylene and the impregnating agent comprises a highly branched poly(alpha-olefin).

4. The process according to Claim 3, wherein the highly branched poly(alpha-olefin) is a polyethylene wax.

5. The process according to any one of Claims 1-4, wherein the amount of impregnating agent is from 2 to 10% by mass.

6. The process according to any one of Claims 1-5, wherein the sizing composition has been applied as an aqueous dispersion and comprises an aminosilane compound.

7. The process according to any one of Claims 1-6, further comprising a step of moulding the long glass fibre-reinforced thermoplastic polymer composition into (semi-)finished articles.

## Patentansprüche

1. Verfahren zur Herstellung einer langglasfaserverstärkten thermoplastischen Polymerzusammensetzung, bei dem man nacheinander:
a) von einem Paket mindestens einen kontinuierlichen Glasmultifilamentstrang, der höchstens 2 Masse-% einer Schlichtezusammensetzung enthält, abwickelt;
b) auf den mindestens einen kontinuierlichen Glasmultifilamentstrang 0,5 bis 20 Masse-% eines Imprägniermittels aufbringt, was einen imprägnierten kontinuierlichen Multifilamentstrang ergibt;
c) um den imprägnierten kontinuierlichen Multifilamentstrang eine Hülle aus thermoplastischem Polymer aufbringt, was einen umhüllten kontinuierlichen Multifilamentstrang ergibt;
**dadurch gekennzeichnet, daß** das Imprägniermittel nichtflüchtig ist, einen Schmelzpunkt aufweist, der mindestens 20°C unter dem Schmelzpunkt der thermoplastischen Matrix liegt, eine Viskosität von 2,5 bis 100 cS bei der Aufbringungstemperatur aufweist und mit dem zu verstärkenden thermoplastischen Polymer verträglich ist.

2. Verfahren nach Anspruch 1, bei dem man ferner den umhüllten kontinuierlichen Glasmultifilamentstrang in Pellets schneidet.

3. Verfahren nach Anspruch 1 oder 2, bei dem es sich bei dem thermoplastischen Polymer um ein Polypropylen handelt und das Imprägniermittel ein hochverzweigtes Poly(alpha-olefin) umfaßt.

4. Verfahren nach Anspruch 3, bei dem es sich bei dem hochverzweigten Poly(alpha-olefin) um ein Polyethylenwachs handelt.

5. Verfahren nach einem der Ansprüche 1-4, bei dem sich die Imprägniermittelmenge auf 2 bis 10 Masse-% beläuft.

6. Verfahren nach einem der Ansprüche 1-5, bei dem die Schlichtezusammensetzung in Form einer wäßrigen Dispersion aufgebracht worden ist und eine Aminosilanverbindung umfaßt.

7. Verfahren nach einem der Ansprüche 1-6, bei dem man ferner die langglasfaserverstärkte thermoplastische Polymerzusammensetzung zu Halbfertigwaren oder Fertigwaren formt.

## Revendications

1. Procédé de production d'une composition polymère thermoplastique renforcée de fibres de verre longues, qui comprend les étapes successives consistant à :
a) dérouler d'un support au moins un brin multifilament de verre continu contenant au plus 2 % en masse d'une composition d'ensimage ;
b) appliquer de 0,5 à 20 % en masse d'un agent d'imprégnation audit au moins un brin multifilament de verre continu pour former un brin multifilament continu imprégné ;
c) appliquer une gaine de polymère thermoplastique autour du brin multifilament continu imprégné pour former un brin multifilament continu gainé ;
**caractérisé en ce que** l'agent d'imprégnation est non volatil, a un point de fusion au moins 20 °C en dessous du point de fusion de la matrice thermoplastique, a une viscosité de 2,5 à 100 cS à température d'application, et est compatible avec le polymère thermoplastique à renforcer.

2. Procédé selon la revendication 1, comprenant en outre une étape de découpe du brin multifilament de verre continu gainé en granulés.

3. Procédé selon la revendication 1 ou 2, dans lequel le polymère thermoplastique est un polypropylène et l'agent d'imprégnation comprend une poly(alpha-oléfine) hautement ramifiée.

4. Procédé selon la revendication 3, dans lequel la poly(alpha-oléfine) hautement ramifiée est une cire de polyéthylène.

5. Procédé selon l'une quelconque des revendications 1 à 4, dans lequel la quantité d'agent d'imprégnation est de 2 à 10 % en masse.

6. Procédé selon l'une quelconque des revendications 1 à 5, dans lequel la composition d'ensimage a été appliquée sous la forme d'une dispersion aqueuse et comprend un composé d'aminosilane.

7. Procédé selon l'une quelconque des revendications 1 à 6, comprenant en outre une étape de moulage de la composition polymère thermoplastique renforcée de fibres de verre longues en articles (semi-)finis.
